# EUROPÄISCHE PATENTANMELDUNG

(11) **EP 1 927 957 A1**
(43) Veröffentlichungstag der Anmeldung: **04.06.2008**
(21) Anmeldenummer: 06024677.4
(22) Anmeldetag: 29.11.2006
(51) Int. Cl.: G08B 13/196, G06K 9/20, G01V 8/22, G01V 8/12

(54) **Vorrichtung und Verfahren zur Überwachung eines Überwachungsbereichs**

(71) Anmelder: SICK AG, 79183 Waldkirch (DE)
(72) Erfinder: Braune, Ingolf, 79194 Gundelfingen (DE); Rothenberger, Bernd, 79206 Breisach (DE)
(74) Vertreter: Ludewigt, Christoph

(57) **Zusammenfassung**

Es wird eine Vorrichtung zur Überwachung eines Überwachungsbereichs mit mindestens einer Kamera (4) angegeben, wobei in dem Überwachungsbereich ein Kontraststreifen (12) vorgesehen ist, der in Längsrichtung wenigstens einen hellen Teilstreifen (13) und/oder wenigstens einen dunklen Teilstreifen (14) aufweist, wobei eine Steuerung (11) dafür ausgebildet ist, die Abschattung eines Mindestbereichs des hellen Teilstreifens (13) und/oder des dunklen Teilstreifens (14) als Eintritt eines Objekts (5) in den Überwachungsbereich zu erkennen. Dabei ist die Steuerung (11) dafür ausgebildet, in einem Bild der Kamera (4) Abschattungen in Spalten in einer Querrichtung zu dem Kontraststreifen (12) als Verletzung einer Signatur des Kontraststreifens (12), nämlich einer Unterschreitung einer ersten Mindestzahl heller Pixel zwischen Hellanfang (Y2) und Hellende (Y3) des hellen Teilstreifens (13) in der jeweiligen Spalte und/oder einer zweiten Mindestzahl dunkler Pixel zwischen Dunkelanfang (Y1) und Dunkelende (Y2) des dunklen Teilstreifens in der jeweiligen Spalte und die Abschattung des Mindestbereich als Abschattung einer vorgegebenen Zahl nebeneinanderliegender Spalten zu erkennen.

Ferner wird ein entsprechendes Verfahren angegeben.

## Beschreibung

Die Erfindung betrifft eine Vorrichtung und ein Verfahren zur Überwachung eines Überwachungsbereichs nach den Oberbegriffen von Anspruch 1 bzw. Anspruch 11.

Überwachungssysteme werden in vielfältigen Anwendungen eingesetzt, um automatisiert Veränderungen des überwachten Bereiches festzustellen. Eine solche Anwendung ist die Absicherung eines Gefahrenbereiches, bei der das Überwachungssystem das Eintreten eines Objektes in den Gefahrenbereich erkennt und nach vorgegebenen Regeln klassifiziert, ob wegen dieses Objekts ein Warnsignal erzeugt oder beispielsweise eine geschützte Maschine abgestellt werden soll. Eine derartige Zugangsabsicherung wird derzeit zwar hauptsächlich mit Lichtgittern oder über Laserscanner realisiert, kann aber ebenso durch eine Kamera erfolgen.

Ein unmittelbares Erkennen des Objektes ist bei digitaler Bilderkennung aufwändig und kann unzuverlässig sein. Deshalb wird zur sicheren Detektierung im Überwachungsbereich eine Reflektorfolie angebracht und deren Verdecken bzw. Abschattung durch das Objekt detektiert. Häufig ist diese Reflektorfolie retroreflektierend, um die Abhängigkeit vom Umgebungslicht zu reduzieren.

Damit auch helle wie dunkle Objekte erkannt werden können, wird oftmals zur ausreichenden Kontrastierung die Reflektorfolie mit einem Muster aus reflektierenden und nichtreflektierenden Bereichen überzogen. So kann etwa dunkle Kleidung vor dem Reflektor, helle Kleidung oder Reflexmarken auf Arbeitskleidung dagegen vor dem nichtreflektierenden Hintergrund sicher erkannt werden.

Aus der DE 199 38 639 B4 ist bekannt, unterschiedliche Reflektormuster in einem Überwachungssystem zu verwenden. Zum Einlernen und Überwachen der Position der Reflektormuster werden Marken verwendet, die aufwändig definiert, platziert und automatisch erkannt werden müssen. Zudem können einige Manipulationen oder Störungen des Reflektormusters nicht erkannt werden, wie beispielsweise eine Welle in einem Bereich, in dem keine Marke vorgesehen ist. Eine einfache und schnelle Auswertung der Abschattungen wird nicht angegeben.

Eine herkömmliche Auswertung auf das Vorhandensein des Reflektors erlaubt nur eine stark reduzierte Manipulationserkennung praktisch ohne Möglichkeit, geometrische Veränderungen der Reflektorposition zu erkennen. Vor allem aber muss die Auswertung schnell und zuverlässig sein, um eine Absicherungsfunktion erfüllen zu können.

Es ist daher Aufgabe der Erfindung, eine einfache, schnelle und sichere Auswertung vornehmen zu können.

Diese Aufgabe wird durch eine Vorrichtung nach dem Anspruch 1 bzw. ein Verfahren nach Anspruch 11 gelöst. Die Lösung hat den Vorteil, dass durch die Signatur die Auswertung sehr komprimiert und damit schnell vorgenommen werden kann. Das geht aber in keiner Weise auf Kosten der Genauigkeit. Das Verfahren erkennt zuverlässig sowohl dunkle als auch helle Objekte. Ein Reflektorstreifen ermöglicht gegenüber anderen Reflektormustern eine Objekterkennung schon bei einer geringeren örtlichen Pixelauflösung.

Die Lösung geht von dem Gedanken aus, dass die wesentlichen Informationen des langgestreckten Kontraststreifens schon in einer einfacheren Signatur kodiert werden können. Damit kann nach einem Einlernen der Signatur eine vergleichsweise unkomplizierte Auswertung mit hoher Zuverlässigkeit Objekte erkennen.

Bevorzugt ist die Steuerung für eine Einlernphase ausgebildet, in der für jede Spalte die die Signatur des Kontraststreifens festlegenden Werte Hellanfang, Hellende, Dunkelanfang und Dunkelende des Kontraststreifens bestimmt und in einem Speicher abgelegt werden können. Die Einlernphase erzeugt die Signaturen für das spätere Auswertungsverfahren. Die Vorrichtung kann also durch Start einer Einlernphase vor dem erstmaligen Betrieb oder jederzeit in einer für den Benutzer unaufwändigen Weise automatisch auf die aktuellen Gegebenheiten angepasst werden.

Noch bevorzugter ist die Steuerung weiterhin dafür ausgebildet, in der Einlernphase die Signatur des Kontraststreifens wie folgt zu bestimmen:
- zähle für jede Spalte, wie oft eine Signatur Hellanfang, Hellende, Dunkelanfang und Dunkelende vorhanden ist,
- wähle den Bereich als Teil des Kontraststreifens, in dem die meisten nebeneinanderliegenden Spalten diese Signatur genau einmal aufweisen,
- setze den Teil des Kontraststreifens in beide Streifenrichtungen maximal fort.
Auf diese Weise wird der Kontraststreifen automatisch erkannt, auch wenn reflektierende Gegenstände im Sichtbereich der Kamera vorhanden sind. Die Vorrichtung stellt sich damit auf die Gegebenheiten selbst ein. Der Kontraststreifen wird zuverlässig in dem Bereich erkannt, in dem seine Hell-Dunkel-Übergänge ausreichend erkannt werden. Durch Abdecken eines Bereichs des Kontraststreifens kann die Vorrichtung dazu gezwungen werden, nur einen Teil des maximal denkbaren Überwachungsbereichs zu überwachen.

Alternativ ist die Steuerung dafür ausgebildet, in der Einlernphase die Signatur des Kontraststreifens wie folgt zu bestimmen:
- zähle für jede Spalte, wie oft eine Signatur Hellanfang, Hellende, Dunkelanfang und Dunkelende vorhanden ist,
- finde Bereiche als Teile des Kontraststreifens, in denen nebeneinanderliegende Spalten diese Signatur genau einmal aufweisen,
- setze jeden Teil des Kontraststreifens in beide Streifenrichtungen maximal fort,
- wähle das nach dieser Fortsetzung längste Streifenstück aus.
Das hat den Vorteil, dass das tatsächlich längste Stück des Kontrastmusters auch in solchen Fällen gefunden wird, in denen die Größe der anfänglich bestimmten Teile des Kontrastmusters dies noch nicht erkennen lässt.

Vorteilhafterweise ist ein zusätzlicher dunkler Teilstreifen derart vorgesehen, dass beide dunklen Teilstreifen den hellen Teilstreifen unmittelbar ohne Zwischenraum flankieren und wobei die Steuerung eine Signatur erster Dunkelanfang, erstes Dunkelende, zweiter Dunkelanfang, zweites Dunkelende verwendet, bei der Hellanfang mit dem ersten Dunkelende und Hellende mit dem zweiten Dunkelanfang zusammenfällt. Dadurch entsteht ein weiterer Hell-Dunkel-Übergang, der die Erkennungssicherheit erhöht. Zudem lässt sich der Kontraststreifen sehr einfach herstellen, indem der helle Teilstreifen auf einen dunklen Untergrund aufgebracht wird.

In einer vorteilhaften Weiterbildung weist der Kontraststreifen in seiner Querrichtung eine periodische Struktur auf. Diese Struktur kann dafür genutzt werden, die Lage des Kontraststreifens zu überwachen.

Bevorzugt ist die Steuerung dafür ausgebildet, signifikante Punkte der periodischen Struktur wie Minima, Nullstellen oder Wendepunkte zu erkennen. Derartige signifikante Punkte charakterisieren den Kontraststreifen mit wenigen Datenpunkten. Das bedeutet weniger Speicher- und weniger Auswertungsaufwand.

Vorteilhafterweise ist die Steuerung dafür ausgebildet, in einer Einlernphase signifikante Punkte in einem Speicher abzulegen, mit im Betrieb bestimmten signifikanten Punkten zu vergleichen und eine Abweichung als Manipulation des Kontraststreifens zu erkennen. Die signifikanten Punkte werden mit wenig Aufwand dafür ausgenutzt, die Lage des Kontraststreifens zu überwachen. Manipulationen werden so schnell und zuverlässig erkannt.

Bevorzugt ist die Steuerung dafür ausgebildet, bei Eintritt eines Objekts oder einer Manipulation ein Warnsignal und/oder ein Abschaltsignal auszugeben. Das ist ein sehr wichtiger Anwendungsfall der Sicherheitstechnik, in dem der Überwachungsbereich einen Gefährdungsbereich absichert, beispielsweise eine Maschine wie einen Montageautomaten oder einen Roboter, der Bedienpersonal verletzen könnte.

Vorteilhafterweise ist eine Beleuchtung für den Überwachungsbereich vorgesehen und der helle Teilstreifen ein Reflektor, insbesondere ein Retroreflektor. Damit ist die Vorrichtung von Umgebungslicht deutlich unabhängiger, da das Licht der Beleuchtung den Hauptteil des empfangenen Lichts ausmacht.

Das erfindungsgemäße Verfahren kann in ähnlicher Weise in weiteren Ausführungsformen fortgebildet werden und zeigt dabei ähnliche Vorteile, wie dies beispielhaft, aber nicht abschließend, in den sich an das Verfahren anschließenden Unteransprüchen angegeben ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig.1 1: eine schematische Übersicht zu einer Ausführungsform der erfindungsgemäßen Vorrichtung zur Überwachung;
- Fig. 2: eine dreidimensionale Ausschnittsdarstellung der Übersicht gemäß der Fig. 1;
- Fig. 3: eine schematische Ansicht des Kontraststreifens gemäß der Erfindung zur Erläuterung des Einlernens der Signatur und der erfindungsgemäßen Auswertung auf Abschattung; und
- Fig.4: eine Draufsicht auf den Kontraststreifen gemäß der Erfindung zur Erläuterung der erfindungsgemäßen Erkennung von Manipulationen bzw. Bewegungen des Kontraststreifens.

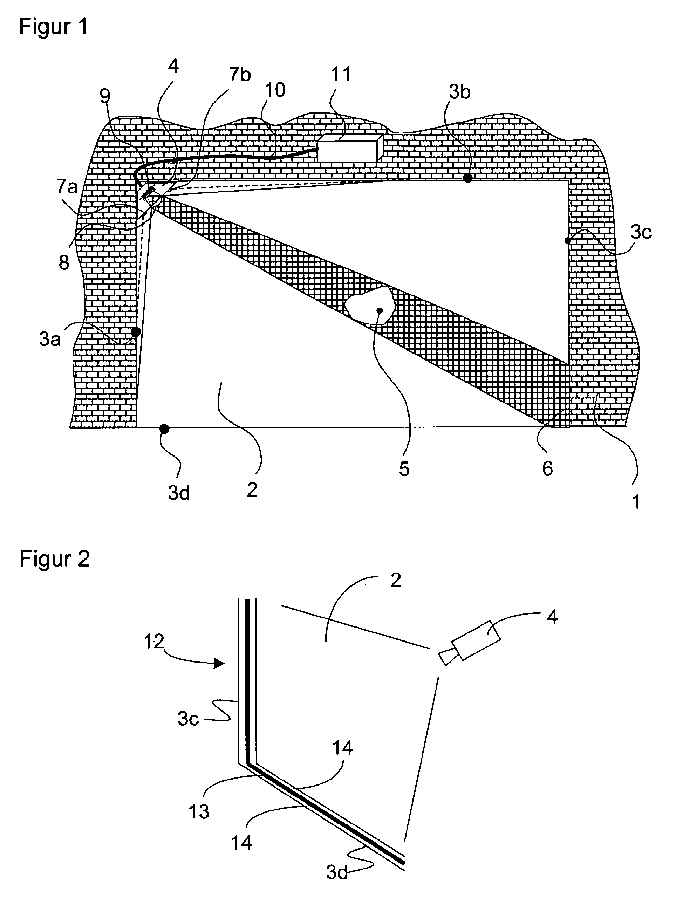

Figur 1 zeigt in einer schematischen Übersicht eine Ausführungsform der Erfindung. In einer Trennwand 1 befindet sich eine Durchgangsöffnung 2, die durch Randflächen 3a - 3d begrenzt ist. Eine Kamera 4 in einer Ecke der Durchgangsöffnung 2 nimmt das Bild der beiden gegenüberliegenden Randflächen 3c, 3d auf. Die Kamera 4 hat in der Darstellung einen größeren Öffnungswinkel als 90° und sieht daher auch noch Abschnitte der Randflächen 3a, 3b. Um die Durchgangsöffnung 2 vollständig zu überwachen, genügen die Randflächen 3c, 3d als Überwachungsbereich. Je nach Anwendung kann aber auch ein Teilabschnitt ausreichen.

Die Kamera 4 überwacht, ob sich ein Objekt 5 in der Durchgangsöffnung 2 befindet. Dieses Objekt 5 verändert nämlich das aufgenommene Bild der Kamera, das ohne das Objekt 5 den nunmehr abgeschatteten Bereich 6 des Überwachungsbereichs ungestört gezeigt hätte.

Neben der Kamera 4 sind zwei Beleuchtungseinrichtungen 7a, 7b angeordnet. Es können zwei oder mehrere Beleuchtungseinrichtungen 7a, 7b symmetrisch zur Kamera 4 eingesetzt werden, es würde aber auch eine genügen. Obwohl grundsätzlich jede Lichtquelle denkbar ist, eignen sich Halbleiterlichtquellen besonders, die ein Lichtband gezielt aussenden. Die Beleuchtung kann selbstverständlich auch über einen Strahlteiler oder jedes sonst bekannte Verfahren möglichst in die optische Achse der Kamera 4 eingekoppelt werden. Wesentlich ist, dass der von der Kamera 4 beobachtete Bereich ausgeleuchtet wird.

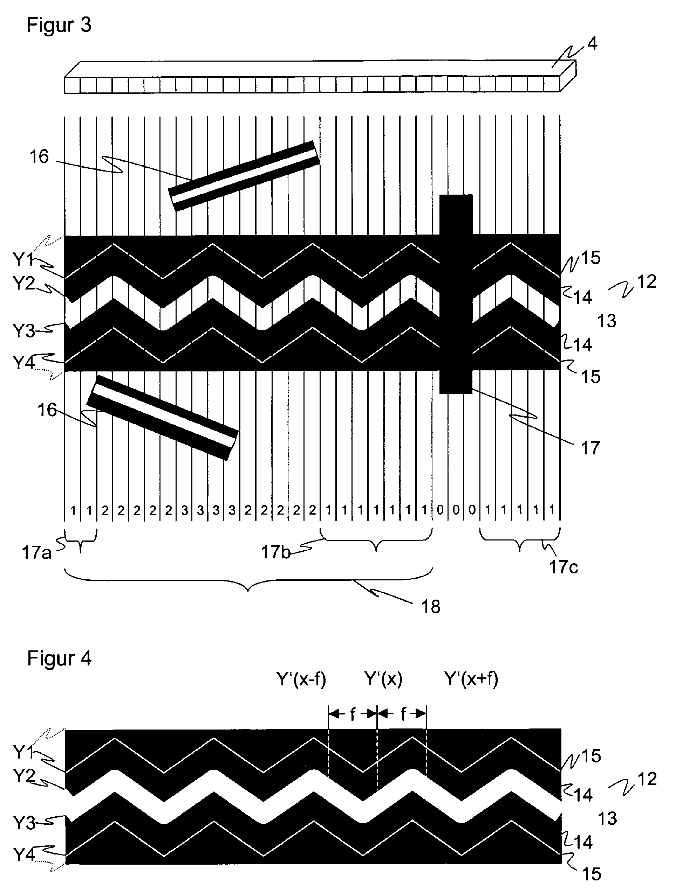

Die Kamera 4 weist ein Objektiv 8 und einen ortsauflösenden Bildsensor 9 auf. Der Bildsensor kann in CMOS- oder CCD-Technologie oder jeder anderen bekannten Bauweise aufgebaut sein, die ein Bild zu liefern vermag. Das Bild wird mit der von der Anwendung geforderten Wiederholungsfrequenz über eine Datenleitung 10 an eine Auswerteeinheit 11 übertragen. Die Auswerteeinheit 11 ist darüber hinaus mit den Beleuchtungseinrichtungen 7a, 7b verbunden, um deren Licht zu steuern. Die Auswerteeinheit 11 hat Informationen über das Bild der Kamera 4, wenn sich kein Objekt 5 in der Durchgangsöffnung 2 befindet und kann aus der Veränderung der Daten des Bildsensors 9 durch das Objekt 5 dessen Anwesenheit erkennen. Dies wird im Zusammenhang mit Fig. 3 eingehend erläutert.

Die Kamera 4 überwacht somit die Durchgangsöffnung 2 gegenüber Objekten 5. Eine denkbare Anwendung ist, dass hinter der Durchgangsöffnung 2 ein Gefahrenbereich liegt, beispielsweise eine Presse oder sonst eine Maschine, in der Personen verletzt werden können. Bei Eintritt in die Durchgangsöffnung 2 kann dann ein Warnsignal gegeben oder die Maschine abgeschaltet werden. Die Anwendung kann aber auch etwa eine Diebstahlsicherung sein, bei der niemand unautorisiert den Bereich hinter der Durchgangsöffnung 2 betreten soll, ohne dass er sich dort wie in der Anwendung als Schutzvorrichtung selbst gefährdet. Die Anwendungen sind auf diese Beispiele nicht beschränkt, die Vorrichtung ist überall einsetzbar, wo der Eintritt eines Objektes erkannt werden soll. Auch die besondere Anordnung in einer Durchgangsöffnung 2 ist beispielhaft zu verstehen; der Überwachungsbereich muss nicht wie in Fig. 1 dargestellt die Hälfte einer Durchgangsöffnung 2 sein, sondern kann eine beliebige Fläche an einem beliebigen Ort sein.

Figur 2 zeigt nochmals einen dreidimensionalen Ausschnitt der Vorrichtung. Die Kamera 4 blickt wegen der veränderten Perspektive der Darstellung nunmehr von rechts auf den Überwachungsbereich. Dieser Überwachungsbereich ist mit einer Reflektorfolie 12 versehen, die hier beispielhaft einen mittigen retroreflektierenden oder alternativ einfach hellen Teilstreifen 13 aufweist, der von zwei dazu parallelen nichtreflektierenden oder dunklen Teilstreifen 14 flankiert wird. Der Kontraststreifen 12 muss nicht notwendig langgestreckt, also im Wesentlichen als Linie abgebildet sein. Es könnten auch Bögen oder dergleichen realisiert werden. Das bedeutet aber zusätzlichen Aufwand bei der Auswertung, um den Bogen auf eine Linie zu transformieren oder die Linie mittels eines zweidimensionalen Algorithmus' zu verfolgen.

Es müssen auch nicht notwendig dunkle Teilstreifen 14 angebracht sein, auch bereits der Hintergrund kann je nach Ausführung und Anforderungen im Verhältnis zu dem Reflektor schon als dunkler Teilstreifen 14 angesehen werden. Umgekehrt kann der Hintergrund im Verhältnis zu einem angebrachten dunkeln Teilstreifen hell sein und somit als heller Teilstreifen 13 fungieren. Jedenfalls entsteht ein hoher Dynamikunterschied zwischen den dunklen Teilstreifen 14 bzw. dem Hintergrund und dem hellen oder Reflektormaterial des Teilstreifens 13, der auch unter dem Einfluss von Fremdlicht eine robuste Auswertung ermöglicht oder zwischen dem Hintergrund und einem dunklen Material des dunklen Teilstreifens 14. Wie nachstehend im Zusammenhang mit den Figuren 3 und 4 erläutert, weisen die Teilstreifen 13, 14 eine Struktur auf, die in der Figur 2 als glatte Streifen übervereinfacht ist.

In einer weiteren Ausführungsform der Erfindung kann eine zweite Reflektorstruktur vorgesehen sein, die einen Warnbereich abgrenzt. Eine Verletzung des Warnfeldes führt zunächst nur zu einem Alarmsignal. Erst wenn auch die andere (erste) Reflektorstruktur überschritten und damit das eigentliche Schutzfeld verletzt wird, führt das zu einem Abschaltsignal an die geschützte Anlage.

Anhand der Figur 3 soll nun das Auswertungsverfahren beschrieben werden, mit dem erfindungsgemäß die Auswerteeinheit 11 feststellt, ob sich ein Objekt 5 im Überwachungsbereich befindet. Die Auswerteeinheit 11 kann erfindungsgemäß außerdem als zweite Überprüfung feststellen, ob der Kontraststreifen 12 manipuliert worden ist. Für diese zweite Überprüfung weisen die Teilstreifen 13, 14 des Kontraststreifens 12 eine gezackte Musterstruktur auf, deren Funktion erst später im Zusammenhang mit Figur 4 erklärt wird.

Vor der Objekterkennung im Betrieb wird in einer Einlernphase die Lage und Struktur des Kontraststreifens 12 eingelernt. Dazu werden die matrixförmigen Pixeldaten der Kamera 4 spaltenweise ausgewertet. Von der Kamera 4 ist nur eine Pixelzeile dargestellt, wobei jedes Pixel die Breite einer in Figur 3 als senkrechte Linien dargestellten Spalte hat. Die dreidimensionale Darstellung der Kamera 4 soll andeuten, dass in jeder Spalte eine Vielzahl von Pixel entsprechend der Auflösung der Kamera 4 vorhanden ist und nicht nur das dargestellte einzelne Pixel je Spalte.

Zunächst muss die Auswerteeinheit 11 den Kontraststreifen 12 innerhalb des Sichtfensters der Kamera 4 erkennen. Die Auswerteeinheit kennt die charakteristische Signatur des Kontraststreifens, nämlich einen Übergang dunkel-hell-dunkel, wie er in jeder Spalte der Figur 3 von dem ersten dunklen Teilstreifen 14 zu dem hellen Teilstreifen 13 zu dem dunklen Teilstreifen 14 vorhanden ist. Unter hell sind beispielsweise Grauwerte oberhalb einer Hellschwelle, dunkel dagegen Grauwerte unterhalb einer Dunkelschwelle zu verstehen. Ein Übergang muss dazwischen einen hinreichenden Signalhub aufweisen.

Die dünne weiße Linie 15 ist nicht Teil des verwendeten Kontraststreifens 12. Der dunkle Teilstreifen 14 weist außer dem hellen Teilstreifen 13 keine hellen Bereiche auf. Die Linie 15 soll nur andeuten, dass der dunkle Teilstreifen 14 entweder parallel zu dem hellen Teilstreifen 13 als Zickzacklinie oder, wenn man die Linie 15 wegdenkt, als glatter Rand endet. Dies sind nur zwei beispielhafte Möglichkeiten, wie der Kontraststreifen 12 berandet sein kann, dieser Rand spielt nämlich bei der Auswertung keine Rolle, da er nicht Teil der Signatur ist.

Statt eines Kontraststreifens 12 mit Übergang dunkel-hell-dunkel kann auch ein solcher mit anderen Übergängen wie hell-dunkel-hell oder dergleichen verwendet werden. Prinzipiell genügt ein Übergang dunkel-hell, der sich aber mit einem Reflektor nur begrenzt umsetzen lässt, da beide Seitenlinien des Reflektorstreifens einen Übergang hell-dunkel beinhalten. Man müsste, um das zu vermeiden, den Reflektor flächig bis an den Rand des Sichtfensters der Kamera 4 fortsetzen. Man kann aber einen dieser beiden fast zwangsläufig gegebenen Übergänge in der Auswertung unberücksichtigt lassen.

Die Auswerteeinheit 11 sucht zunächst in jeder Spalte Übergänge gemäß der Signatur. Dazu muss also auf eine erste Mindestzahl benachbarter dunkler Pixel eine zweite Mindestzahl benachbarter heller Pixel und hierauf wiederum eine dritte Mindestzahl dunkler Pixel folgen. Als Mindestzahl genügt im Extremfall ein Pixel, um aber nicht auf jede kleinste Verschmutzung zu reagieren, sollten die Mindestzahlen zumindest einige Pixel umfassen. Kompliziertere Kriterien sind denkbar, etwa dass unter einer Gruppe benachbarter Pixel zumindest die Mindestzahl die erforderliche Eigenschaft hell oder dunkel hat. Damit würde eine Störung einzelner Pixel durch Verschmutzung oder dergleichen die Auswertung nicht hindern.

Derartige Übergänge entsprechend der Signatur werden in jeder Spalte quer zum Kontraststreifen 12 gefunden. Sie können aber auch im Sichtfeld liegenden Objekten 16 zuzuordnen sein. Diese Objekte 16 müssen nicht wie dargestellt saubere helle und dunkle Streifen aufweisen, damit die Signatur erkannt würde. Je nach Mindestzahlen für die zu erkennenden Pixel und Schwellwerten für dunkel und hell kann auch ein einfaches helles oder dunkles Objekt genügen.

Die Auswerteeinheit 11 zählt nun für jede Spalte, wie oft die Signatur erkannt wurde. In der in Figur 3 linken Spalte ist das nur der Kontraststreifen 12 selbst, also eine "1" (die in der untersten Zeile dargestellt ist). In der Spalte daneben ist die Signatur des Objekts 16 nicht vollständig, daher wird auch hier nur der Kontraststreifen 12 als "1" gezählt. In den nächsten fünf Spalten ist die Signatur des unteren Objekts 16 und die des Kontraststreifens 12 erkennbar, also "2". In den nächsten vier Spalten tritt das obere Objekt 16 hinzu, also "3" usw. In den von rechts gezählten Spalten 6 - 8 verdeckt ein dunkler Prüfstab 17 den Kontraststreifen 12, deshalb werden hier "0" Signaturen gezählt.

Im nächsten Schritt werden Bereiche 17a - 17c gesucht, in denen genau einmal die Signatur gezählt wurde. In diesen Bereichen 17a - 17c liegt kein störendes Objekt 16 im Sichtfeld. Unter den Bereichen 17a - 17c wird der längste Bereich 17b ausgewählt. Dieser wird nun nach rechts und links maximal fortgesetzt, nämlich nach rechts bis zum Prüfstab 17 und nach links bis zum Rand des Kontraststreifens 12, um den maximalen Überwachungsbereich 18 zu finden. Der Prüfstab 17 legt, indem er den Kontraststreifen 12 bedeckt und damit die Signatur nicht nach rechts fortgesetzt ist, den maximalen Überwachungsbereich 18 fest. Entfernt man den Prüfstab 17 und lernt erneut ein, so könnte der gesamte Kontraststreifen 12 gefunden und damit der maximale Überwachungsbereich 18 erweitert werden.

In einem alternativen Verfahren zur Bestimmung des maximalen Überwachungsbereichs wird nicht nur der längste Bereich 17b, sondern werden einige oder alle Teilbereiche 17a - 17c maximal nach rechts und links fortgesetzt. Dabei entsteht aus den Teilbereichen 17a und 17b der maximale Überwachungsbereich 18, der Teilbereich 17c lässt sich nicht fortsetzen. Nun wird verglichen, welches der nach Fortsetzung entstandenen Teilstücke das größte ist. Das ist erneut der maximale Überwachungsbereich 18, der größer ist als der Bereich 17c.

Dieses alternative Verfahren ist etwas aufwändiger, weil mehr Fortsetzungen berechnet werden müssen. Es hat aber den Vorteil, dass der maximale Überwachungsbereich 18 auch dann gefunden wird, wenn der zunächst angenommene größte Bereich 17b "in die Irre führt", weil nach Fortsetzung ein anderer Teilbereich größer würde. Außerdem funktioniert das Verfahren auch dann, wenn es anfänglich keinen einzelnen, sondern mehrere größte Teilbereiche gibt, die dann einfach alle fortgesetzt werden. Ergibt sich auch nach Fortsetzung kein eindeutiger maximaler Überwachungsbereich 18, so wird einer der möglichen maximalen Überwachungsbereiche 18 ausgewählt und/oder eine Warnung ausgegeben.

Schließlich speichert die Auswerteeinheit 11 diejenigen Werte Y1 - Y4 jeder Spalte, bei denen die Übergänge zu hellen Teilstreifen 13 bzw. dunklen Teilstreifen 14 im Kontrastmusterstreifen 12 erkannt wurden. Es entsteht somit eine Tabelle aus 4x (Spaltenzahl des maximalen Überwachungsbereichs) Werten. In der Auflösung der Kamera 4 ist in dieser Tabelle die gesamte relevante Information über den Kontrastmusterstreifen 12 enthalten.

Im Betrieb, nach Abschluss der Einlernphase, läuft dann die Objekterkennung wie folgt ab. Für jede Spalte innerhalb des maximalen Überwachungsbereichs 18 wird geprüft, ob zwischen Y1 und Y2 eine Mindestzahl von Pixeln dunkel, zwischen Y2 und Y3 eine Mindestzahl von Pixeln hell und zwischen Y3 und Y4 eine Mindestzahl von Pixeln dunkel ist. Die Anforderungen an die Mindestzahlen können diejenigen des Einlernens oder analog festgelegte Mindestzahlen sein. Wenn man nicht fordert, dass alle Pixel zwischen Yn und Y(n-1) hell bzw. dunkel sein müssen, so lässt dies eine Toleranz gegenüber Verschmutzungen oder ähnlichen Fehlerquellen. Auch eine kleine Toleranz gegenüber Verschiebungen ist denkbar, dass also die Werte Y1 - Y4 um einige Pixel gegenüber den eingelernten Werten abweichen.

Eine Spalte, in der die Signatur im Betrieb gemäß dem vorstehenden Absatz nicht erhalten ist, wird als (teil)abgeschattet eingestuft. Sind mehrere benachbarte Spalten derart abgeschattet, so dass die Breite der mehreren Spalten eine vorgegebene Objektgröße überschreitet, so erkennt die Auswerteeinheit 11 ein Objekt 5 und reagiert darauf beispielsweise mit einem Warn- oder Abschaltsignal.

Das beschriebene Auswertungsprinzip ist nicht auf die dargestellten senkrechten Spalten beschränkt. Die Signatur ist in einem weiten Winkelbereich unempfindlich gegenüber einer Verdrehung des Kontraststreifens 12 gegenüber der Kamera 4. Prinzipiell können auch mit Absicht schräge Spalten verwendet werden, die aber wegen des erhöhten Auswertungsaufwands in einer Pixelmatrix zunächst einen höheren Aufwand erfordern.

Ab einem bestimmten Verdrehungswinkel, der von dem Zickzackmuster abhängt, werden mehrere Signaturen innerhalb einer Spalte erkannt. Das ist spätestens bei horizontalen "Spalten" der Fall. Dann muss das Einlernverfahren adaptiert werden. Eine charakteristische Signatur bleibt aber erhalten, die über eine größere Zahl von Werten Y1...Yn, n>4, gespeichert werden kann. Prinzipiell ist daher die Erfindung auch in diesem Fall anwendbar.

Anhand der Figur 4 wird nun erklärt, wie in einem zweiten unabhängigen Auswerteverfahren eine Manipulation des Kontraststreifens 12 von der Auswerteeinheit 11 erkannt wird. Dazu wird das über bloße Hell-Dunkel-Übergänge hinausgehende Muster des Kontraststreifens 12 ausgenutzt. Dargestellt ist ein Zickzackmuster, bei dem zu dem mittigen hellen Teilstreifen 13 auf beiden Seiten je ein dunkler Teilstreifen 14 im Wesentlichen (stückweise) parallel verläuft. Ebenso denkbar ist aber jedes andere Muster, das wegen der einfacheren Auswertung vorzugsweise periodisch sein sollte, wie eine Welle, ein Trapez, ein Sinusbogen oder dergleichen.

In einer Einlernphase werden signifikante Punkte des Musters des Kontraststreifens 12 ermittelt und gespeichert. Signifikante Punkte können Extrema, Nullstellen, Wendepunkte oder sonstige eindeutig definierbare Punkte des Musters sein. Unter "Nullstelle" ist wegen des willkürlich festlegbaren Offsets in Y-Richtung ganz allgemein das Erreichen eines festen Y-Werts zu verstehen. Insbesondere kann man auch bei einem zu einer X-Achse symmetrischen Muster die Symmetrieachse als Offset oder "0" wählen. Der Verlauf des Musters ist aus der Einlernphase für die Objekterkennung bekannt, die im Zusammenhang mit Figur 3 beschrieben wurde. Die Werte Y1 bilden eine digitale Funktion der Spaltenzahl, aus der die signifikanten Punkte mit bekannten Methoden der Analysis bestimmt werden können (es genügt, Y1 zu betrachten, da Y2..Y4 dasselbe periodische Muster parallelverschoben beschreiben und somit ebenso gut verwendet werden könnten).

Im Betrieb werden die signifikanten Punkte erneut in analoger Weise bestimmt. Dazu müssen auch die eventuell nach einer Manipulation veränderten Werte Y1 als Y' neu erneut ermittelt werden. Ein Vergleich der so ermittelten momentanen signifikanten Punkte mit den in der Einlernphase gespeicherten signifikanten Punkten deckt eine Manipulation des Kontraststreifens 12 auf. Der Vergleich kann zum einen Veränderungen einzelner signifikanter Punkte erkennen, aber auch der Periode, also ihres Abstands untereinander. Unter Manipulation ist jede Lageveränderung zu verstehen, unabhängig davon, ob sie von einem Bediener oder etwa Materialerscheinungen wie Verwerfungen, Verbiegen etc. verursacht wurde.

Ein Beispiel, wie signifikante Punkte im Betrieb erkannt werden, wird nun anhand der Figur 4 erläutert. Aus der Einlernphase ist die halbe Periode f des Musters des Kontraststreifens 12 zumindest ungefähr bekannt. In jeder Spalte x werden nun Werte Y'(x) bestimmt, wo ein Übergang von dem hellen Teilstreifen 13 zu dem oberen dunklen Teilstreifen 14 erkannt wird.

Nun wird die folgende Funktion H(x) definiert: H(x)=2*Y'(x)-(Y'(x+f)+Y'(x-f)).

H(x) ist mittelwertfrei und hat einen periodischen Verlauf mit der Periode des Musters des Kontraststreifens 12. Nach geeigneter Glättung können die Nullstellen von H(x) leicht ermittelt werden. Diese Nullstellen sind zugleich signifikante Punkte von Y'(x) und damit des Musters des Kontraststreifens 12 selbst. Somit ist mit Hilfe von H(x) eine beispielhafte Implementierung der schnellen und sicheren Erkennung signifikanter Punkte erreichbar.

Die Erfindung besteht zusammenfassend aus zwei voneinander unabhängigen Auswertungen, die auf einem gemeinsamen Kontraststreifen 12 vorgenommen werden und bei denen eine Auswertung des Musters gegen ein eingelerntes Muster erfolgt.

Die erste Auswertung ist eine Objekterkennung, die auf dem Musterverlauf dunkel-hell-dunkel quer zu dem Kontraststreifen 12 basiert. Dieser Musterverlauf wird in dem aktuellen Bild der Kamera 4 an jedem Ort bzw. in jeder Spalte verifiziert. Bei einem unerlaubten Eingriff in den Überwachungsbereich wird der optische Strahlengang zwischen Beleuchtung 7a, 7b, Reflektor 14 (bzw. Kontraststreifen 12) und Kamera 4 durch ein Objekt 5 beeinflusst. Die Signatur des Kontraststreifens 12 ist dann nicht mehr erkennbar. Dies ist eine Möglichkeit, eine Schutzfeldverletzung zu erkennen, die zu einem Warn- oder Abschaltsignal führt.

Zusätzlich muss die Vorrichtung jedoch Manipulationsversuche oder Störungen des Kontraststreifens 12 selbst erkennen können. Dies wird durch Wahl eines geeigneten periodischen Musters erreicht, welches eine Überwachung der Lage und des Abstands des Kontraststreifens 12 ermöglicht. Das zweite Auswertungsverfahren bewertet den periodischen Verlauf des Musters des Kontraststreifens 12 und erkennt daran zuverlässig, ob der Kontraststreifen verschoben oder in seiner Distanz zur Kamera verändert wurde. Diese zweite Manipulationsauswertung ist von der Objekterkennung unabhängig und kann schon allein zu einem Warn- oder Abschaltsignal führen.

Beide Auswertungen gehen also in die Entscheidung ein, ob ein Warn- oder Abschaltsignal erfolgen soll. In der Sicherheitstechnik würde eine Oder-Verknüpfung bevorzugt, es sind aber natürlich andere Bewertungen denkbar. Dazu gehört, nur eine Objekterkennung oder nur eine Manipulationserkennung vorzunehmen.

Beide Auswertungen basieren auf demselben Kontraststreifen 12 und funktionieren auch bei vergleichsweise geringer optischer Auflösung bis zu einer theoretischen Grenze von einem Pixel je hellem Teilstreifen 13 bzw. dunklem Teilstreifen 14 (in Y-Richtung) und zwei Pixeln in X-Richtung je Periode (bei einem Pixel ist keine sinnvolle Periode definierbar).

Die Positionserkennung der Manipulationsauswertung basiert auf vielen Pixeln in der näheren Umgebung. Dadurch entsteht eine relativ hohe Unempfindlichkeit gegenüber Vibrationen und Verschmutzung. Die Amplitude des periodischen Musters des Kontraststreifens 12 durchbricht in günstiger Weise die Diskretisierung bei geringer Auflösung des optischen Systems.

### Bezugszeichenliste

- 1 -: Trennwand
- 2 -: Durchgangsöffnung
- 3a - d -: Randflächen
- 4 -: Kamera
- 5 -: Objekt
- 6 -: abgeschatteter Bereich
- 7a, 7b -: Beleuchtungseinrichtungen
- 8 -: Objektiv
- 9 -: Bildsensor
- 10 -: Datenleitung
- 11 -: Auswerteeinheit
- 12 -: Reflektorfolie
- 13 -: heller bzw. reflektierender Streifen
- 14 -: dunkler bzw. nichtreflektierender Streifen
- 15 -: Linie (nur zur Illustration)
- 16 -: Störobjekte
- 17 -: Prüfstab
- 17a - c -: mögliche Bereiche des Kontraststreifens
- 18 -: maximaler Überwachungsbereich
- Y1..Y4 -: Ränder der hellen bzw. dunklen Teilstreifen
- Y' -: Rand des oberen dunklen Teilstreifens

## Patentansprüche

1. Vorrichtung zur Überwachung eines Überwachungsbereichs mit mindestens einer Kamera (4), wobei in dem Überwachungsbereich ein Kontraststreifen (12) vorgesehen ist, der in Längsrichtung wenigstens einen hellen Teilstreifen (13) und/oder wenigstens einen dunklen Teilstreifen (14) aufweist, wobei eine Steuerung (11) dafür ausgebildet ist, die Abschattung eines Mindestbereichs des hellen Teilstreifens (13) und/oder des dunklen Teilstreifens (14) als Eintritt eines Objekts (5) in den Überwachungsbereich zu erkennen, **dadurch gekennzeichnet, dass** die Steuerung (11) dafür ausgebildet ist, in einem Bild der Kamera (4) Abschattungen in Spalten in einer Querrichtung zu dem Kontraststreifen (12) als Verletzung einer Signatur des Kontraststreifens (12), nämlich einer Unterschreitung einer ersten Mindestzahl heller Pixel zwischen Hellanfang (Y2) und Hellende (Y3) des hellen Teilstreifens (13) in der jeweiligen Spalte und/oder einer zweiten Mindestzahl dunkler Pixel zwischen Dunkelanfang (Y1) und Dunkelende (Y2) des dunklen Teilstreifens in der jeweiligen Spalte und die Abschattung des Mindestbereichs als Abschattung einer vorgegebenen Zahl nebeneinanderliegender Spalten zu erkennen.

2. Vorrichtung nach Anspruch 1, wobei die Steuerung (11) für eine Einlernphase ausgebildet ist, in der für jede Spalte die die Signatur des Kontraststreifens (12) festlegenden Werte Hellanfang (Y2), Hellende (Y3), Dunkelanfang (Y1) und Dunkelende (Y2) des Kontraststreifens (12) bestimmt und in einem Speicher abgelegt werden können.

3. Vorrichtung nach Anspruch 2, wobei die Steuerung (11) weiterhin dafür ausgebildet ist, in der Einlernphase die Signatur des Kontraststreifens (12) wie folgt zu bestimmen:
- zähle für jede Spalte, wie oft eine Signatur Hellanfang (Y2), Hellende (Y3), Dunkelanfang (Y1) und Dunkelende (Y2) vorhanden ist,
- wähle den Bereich (17b) als Teil des Kontraststreifens (12), in dem die meisten nebeneinanderliegenden Spalten diese Signatur genau einmal aufweisen,
- setze den Teil des Kontraststreifens (12) in beide Streifenrichtungen maximal fort (18).

4. Vorrichtung nach Anspruch 2, wobei die Steuerung (11) weiterhin dafür ausgebildet, in der Einlernphase die Signatur des Kontraststreifens (12) wie folgt zu bestimmen:
- zähle für jede Spalte, wie oft eine Signatur Hellanfang (Y2), Hellende (Y3), Dunkelanfang (Y1) und Dunkelende (Y2) vorhanden ist,
- finde Bereiche (17a, 17b, 17c) als Teile des Kontraststreifens (12), in denen nebeneinanderliegende Spalten diese Signatur genau einmal aufweisen,
- setze jeden Teil des Kontraststreifens (12) in beide Streifenrichtungen maximal fort (17c, 18),
- wähle das nach dieser Fortsetzung längste Streifenstück (18) aus.

5. Vorrichtung nach einem der vorhergehenden Ansprüche, wobei ein zusätzlicher dunkler Teilstreifen derart vorgesehen ist, dass beide dunklen Teilstreifen (14) den hellen Teilstreifen (13) unmittelbar ohne Zwischenraum flankieren, und wobei die Steuerung (11) eine Signatur erster Dunkelanfang (Y1), erstes Dunkelende (Y2), zweiter Dunkelanfang (Y3), zweites Dunkelende (Y4) verwendet, bei der Hellanfang (Y2) mit dem ersten Dunkelende (Y2) und Hellende (Y3) mit dem zweiten Dunkelanfang (Y3) zusammenfällt.

6. Vorrichtung nach einem der vorhergehenden Ansprüche, wobei der Kontraststreifen (12) in seiner Querrichtung eine periodische Struktur aufweist.

7. Vorrichtung nach Anspruch 6, wobei die Steuerung (11) dafür ausgebildet ist, signifikante Punkte der periodischen Struktur wie Minima, Nullstellen oder Wendepunkte zu erkennen.

8. Vorrichtung nach Anspruch 7, wobei die Steuerung (11) dafür ausgebildet ist, in einer Einlernphase signifikante Punkte in einem Speicher abzulegen, mit im Betrieb bestimmten signifikanten Punkten zu vergleichen und eine Abweichung als Manipulation des Kontraststreifens (12) zu erkennen.

9. Vorrichtung nach einem der vorhergehenden Ansprüche, wobei die Steuerung (11) dafür ausgebildet ist, bei Eintritt eines Objekts (5) oder einer Manipulation ein Warnsignal und/oder ein Abschaltsignal auszugeben.

10. Vorrichtung nach einem der vorhergehenden Ansprüche, wobei eine Beleuchtung (7a, 7b) für den Überwachungsbereich vorgesehen ist und der helle Teilstreifen (13) ein Reflektor, insbesondere ein Retroreflektor ist.

11. Verfahren zur Überwachung eines Überwachungsbereichs mit mindestens einer Kamera (4), wobei in dem Überwachungsbereich ein Kontraststreifen (12) vorgesehen ist, der in Längsrichtung wenigstens einen hellen Teilstreifen (13) und/oder wenigstens einen dunklen Teilstreifen (14) aufweist und wobei der Eintritt eines Objekts (5) in den Überwachungsbereich anhand der Abschattung eines Mindestbereichs des hellen Teilstreifens (13) und/oder des dunklen Teilstreifens (14) erkannt wird, **dadurch gekennzeichnet, dass** in einem Bild der Kamera (4) Abschattungen in Spalten in einer Querrichtung zu dem Kontraststreifen (12) als Verletzung einer Signatur des Kontraststreifens (12), nämlich einer Unterschreitung einer ersten Mindestzahl heller Pixel zwischen Hellanfang (Y2) und Hellende (Y3) des hellen Teilstreifens (13) in der jeweiligen Spalte und/oder einer zweiten Mindestzahl dunkler Pixel zwischen Dunkelanfang (Y1) und Dunkelende (Y2) des dunklen Teilstreifens (14) in der jeweiligen Spalte, und die Abschattung des Mindestbereichs als Abschattung einer vorgegebenen Zahl nebeneinanderliegender Spalten erkannt wird.

12. Verfahren nach Anspruch 10, wobei in einer Einlernphase für jede Spalte die die Signatur des Kontraststreifens (12) festlegenden Werte Hellanfang (Y2), Hellende (Y3), Dunkelanfang (Y1) und Dunkelende (Y2) des Kontraststreifens (12) bestimmt werden.

13. Verfahren nach Anspruch 12, wobei in der Einlernphase die Signatur des Kontraststreifens (12) wie folgt bestimmt wird:
- zähle für jede Spalte, wie oft eine Signatur Hellanfang (Y2), Hellende (Y3), Dunkelanfang (Y1) und Dunkelende (Y2) vorhanden ist,
- wähle den Bereich als Teil des Kontraststreifens (12), in dem die meisten nebeneinanderliegenden Spalten diese Signatur genau einmal aufweisen,
- setze den Teil des Kontraststreifens (12) in beide Streifenrichtungen maximal fort.

14. Verfahren nach Anspruch 12, wobei in der Einlernphase die Signatur des Kontraststreifens (12) wie folgt bestimmt wird:
- zähle für jede Spalte, wie oft eine Signatur Hellanfang (Y2), Hellende (Y3), Dunkelanfang (Y1) und Dunkelende (Y2) vorhanden ist,
- finde Bereiche (17a, 17b, 17c) als Teile des Kontraststreifens (12), in denen nebeneinanderliegende Spalten diese Signatur genau einmal aufweisen,
- setze jeden Teil des Kontraststreifens (12) in beide Streifenrichtungen maximal fort (17c, 18),
- wähle das nach dieser Fortsetzung längste Streifenstück (18) aus.

15. Verfahren nach einem der Ansprüche 11 bis 14, wobei ein zusätzlicher dunkler Teilstreifen derart vorgesehen ist, dass beide dunklen Teilstreifen (14) den hellen Teilstreifen (13) unmittelbar ohne Zwischenraum flankieren und eine Signatur erster Dunkelanfang (Y1), erstes Dunkelende (Y2), zweiter Dunkelanfang (Y3), zweites Dunkelende (Y4) verwendet wird, bei der Hellanfang (Y2) mit dem ersten Dunkelende (Y2) und Hellende (Y3) mit dem zweiten Dunkelanfang (Y3) zusammenfällt.

16. Verfahren nach einem der Ansprüche 11 bis 15, wobei der Kontraststreifen (12) in seiner Querrichtung eine periodische Struktur aufweist und signifikante Punkte der periodischen Struktur wie Minima, Nullstellen oder Wendepunkte erkannt werden.

17. Verfahren nach Anspruch 16, wobei in einer Einlernphase signifikante Punkte bestimmt und mit im Betrieb bestimmten signifikanten Punkten verglichen werden und wobei und eine Abweichung als Manipulation des Kontraststreifens (12) erkannt wird.

18. Verfahren nach einem der Ansprüche 11 bis 17, wobei bei Erkennen des Eintritts eines Objekts (5) oder einer Manipulation ein Warnsignal und/oder ein Abschaltsignal ausgegeben wird.
